# EUROPEAN PATENT SPECIFICATION

(11) **EP 2 881 636 B1**
(45) Date of publication and mention of the grant of the patent: **07.09.2016**
(21) Application number: 13195769.8
(22) Date of filing: 04.12.2013
(51) Int. Cl.: F16K 31/06, F16K 31/08

(54) **Valve provided with a magnetic actuator**
Ventil mit magnetischem Stellglied
Soupape fournie avec un actionneur magnétique

(43) Date of publication of application: 10.06.2015
(73) Proprietor: Sidel S.p.a. Con Socio Unico, Parma (IT)
(72) Inventor: D'Errico, Stefano, 43100 Parma (IT); Cocchi, Enrico, 43100 Parma (IT)
(74) Representative: D'Angelo, Fabio

(56) References cited:
- JP-A- S5 993 581
- US-A- 5 065 786
- US-B1- 6 246 131

## Description

### TECHNICAL FIELD

The present invention relates to a valve provided with a magnetic actuator. In particular, the present invention relates to valves designed to control the flow of a fluid for filling a container with a liquid, preferably a carbonated soft drink.

### BACKGROUND ART

As it is generally known, in filling machines containers are filled with a liquid while they are arranged on respective supports and have their mouths located beneath respective filling devices. A filling device substantially comprises a filling chamber and a filling head movable along a vertical direction, so as to move from and towards the respective container mouth. The filling device further comprises a stopper movable inside the filling chamber between a closed position, to cut off the liquid flow to the mouth of the respective container, and an open position, to put the filling chamber in communication with such a mouth, thereby enabling the liquid to flow into the container.

For carbonated liquids, in particular for carbonated soft drinks, before being filled each container is subjected to some preliminary steps, i.e. to a first evacuation step, in which air is sucked from the container by means of a vacuum system; to a flushing step, in which carbon dioxide is supplied into the container and mixed with the remaining air; to a second evacuation step, in which the mix of residual air and carbon dioxide is sucked by means of the vacuum system; and to a pressurization step, in which carbon dioxide is supplied from a gas line into the container to pressurize the container to a given pressure.

After pressurization, the stopper is moved to the open position so as to fill the container. In particular, filling may comprise a fast-rate filling step and, afterwards, a slow-rate filling step. During such filling steps, carbon dioxide progressively flows out of each container and returns to the gas line. In particular, a control unit adjusts the pressure difference between the pressure of the supplied liquid and the pressure in the gas line, in relation to a set-point that have been set according to the process and/or to the kind of liquid.

After having filled the container with the liquid, the carbon dioxide at the container neck is depressurized, so that the pressure above the liquid level equals atmospheric pressure.

The flow of the carbon dioxide to and from the container is controlled by means of a valve block, which is provided, in particular, with three on-off valves. The first of these valves allows to pressurize the container; the second valve allows the carbon dioxide to return to the gas line during filling; and the third valve allows to depressurize the container at the end of the filling process.

The known on-off valves that are normally used in filling devices have a mechanical transmission that transmits the movement from an actuator, defined by a pneumatic actuator, to a plug member, defined by a membrane, designed to perform the opening and closing of a valve seat.

These kind of valves has some drawbacks. First, the components of the mechanical transmission are subjected to wear and therefore have a relatively low life cycle. Secondly, they enter in contact with the gas flow, and there is not a perfect separation between the inner aseptic environment and the external non-sterile environment. Moreover, the response time of the plug member is rather bad, and therefore the control of the gas flow during filling is not as precise as desired.

In order to solve such drawbacks, it is preferable to remotely move the plug member by means of the action of a magnetic field, without mechanical interfaces entering in contact with the aseptic environment of the valve. In this regard, patent US6246131B1 shows, in figure 10, a valve provided with a magnetic actuator. The actuator has a cylindrical sleeve, an iron core axially movable inside the cylindrical sleeve, and a coil arranged around the cylindrical sleeve. A first permanent magnet and a second permanent magnet are symmetrically mounted on opposite sides of the coil, with the same pole aimed against each other. Magnetic guide rings are symmetrically provided between the coil and the permanent magnets to enhance the effect of magnetic force.

By giving a transient positive or negative impulse voltage (about 0.01 second), the magnetization direction in the coil changes and a magnetic force is produced so as to cause the iron core to axially move.

In this solution, the gas flows in a conduit which is arranged on one side of the magnetic actuator and extends transversally to the axis of the iron core. The valve seat is arranged in a side chamber and can be closed by a plug member, which is fixed to an axial end of the iron core and is housed in such side chamber. Because of this arrangement, when a possible cleaning liquid is supplied into the conduit to clean the valve, there are points of the valve that are not easily reached. In particular, these points are defined by the space where the iron core slides. Therefore, this kind of valve cannot be cleaned and/or sterilized by means of the so-called CIP and SIP processes (clean-in-place; sterilization-in-place) and cannot be used in filling machines.

Moreover, because of the cylindrical shape of the iron core, it seems that there cannot be a single and univocal rest position of the iron core when the coil is not energized, and the magnetic axial force could be rather low.

Electromagnetic actuated flow control valves are also disclosed in documents US 5065786 and JP 59093581.

### DISCLOSURE OF INVENTION

It is an object of the present invention to make a valve with a magnetic actuator designed to provide a cheap and convenient solution to the above drawbacks.

According to the present invention, there is provided a valve with a magnetic actuator as set forth in Claim 1.

### BRIEF DESCRIPTION OF THE DRAWINGS

In the following, a preferred, non-limiting embodiment of the present invention will be described by way of example with reference to the accompanying drawings, in which:
Figures 1 shows a schematic sectional view of a filling device having a preferred embodiment of the valve provided with a magnetic actuator according to the teachings of the present invention;
Figure 2 is a perspective enlarged view of the valve shown in Figure 1;
Figures 3 and 4 are sectional views of the valve of Figure 2, arranged respectively in an open and a closed operating condition; and
Figure 5 schematically shows the magnetic actuator of the valve of the previous Figures.

### BEST MODE FOR CARRYING OUT THE INVENTION

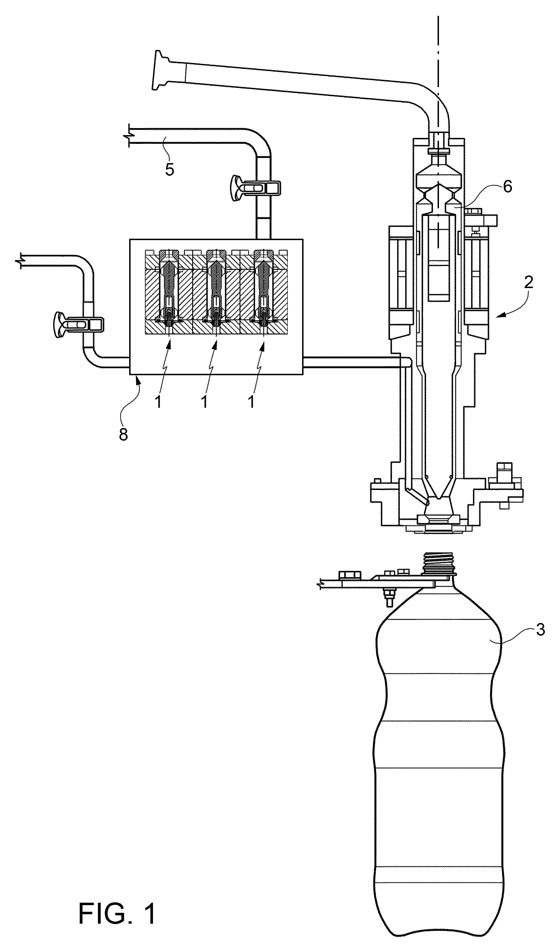

In Figure 1, number 1 indicates a valve, designed so as to form part of a filling device 2 for filling a container 3 with a liquid, in particular a carbonated soft drink.

Apart from the valve 1, the features of the filling device 2 are generally known in the art and, therefore, are not described in detail. In particular, the filling device 2 is configured to carry out a pressurization step before filling the container 3, so as to supply a gas, in particular carbon dioxide, from a gas line 5 into the container 3 and therefore pressurize the container 3 to a given pressure. Filling device 2 comprises a liquid supply line 6 which, after the pressurization step, is opened so as to supply a liquid into the container 3. In particular, filling may comprise a fast-rate filling step and, afterwards, a slow-rate filling step. During filling, carbon dioxide progressively flows out of container 3 and returns to gas line 5. In particular, a control unit (not shown) adjusts the pressure difference between the pressure of the supplied liquid and the pressure in the gas line 5, in relation to a set-point that have been set according to the process and/or to the kind of liquid.

After having filled the container 3, the carbon dioxide at the container neck is depressurized, so that the pressure above the liquid level equals atmospheric pressure.

The flow of the carbon dioxide to and from the container 3 is controlled by means of a valve block 8, which comprises three on-off valves 1, in the preferred embodiment shown in the Figure 1. A first of the valves 1 allows to pressurize the container 3; a second of the valves 1 allows the carbon dioxide to return to the gas line 5; and the third allows to depressurize the container 3 at the end of the filling process.

According to a different embodiment (not shown), in valve 1 is used in the valve block 8 as a modulating or proportional valve, instead of an on-off valve, in particular to control the gas flow as a function of the measurement of a flow meter (not shown) designed to check the quantity of the liquid supplied to the container 3. In this case, the valve block 8 can comprise only two valves 1, instead of three, and/or the control carried out by the control unit can be different from the one mentioned above.

In combination or as an alternative to the use in valve block 8 to control the gas flow, valve 1 can be arranged along the liquid supply line 6 to directly control the flow of the liquid filled into the container 3.

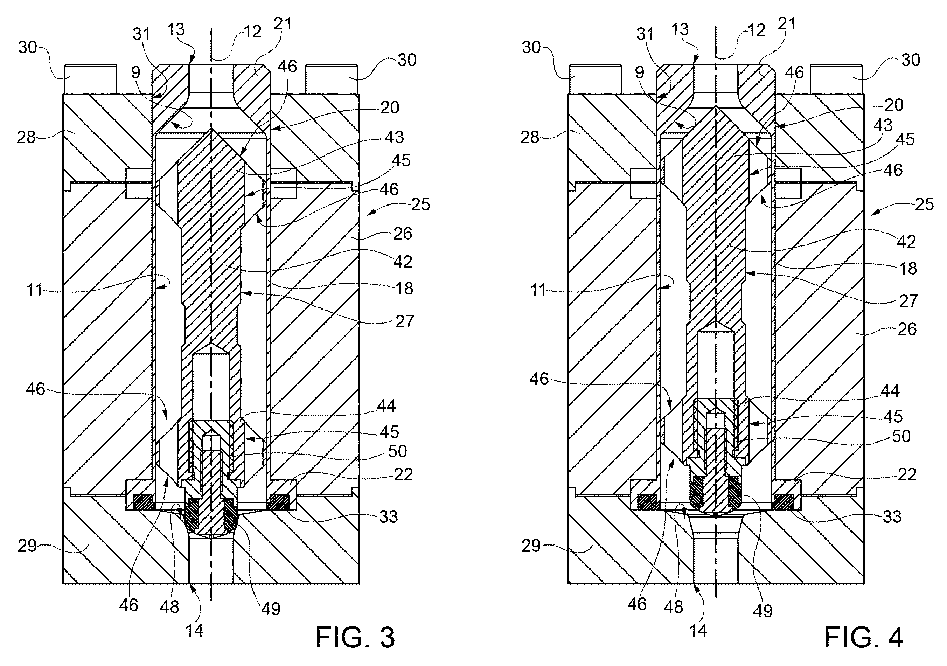

As shown in Figures 3 and 4, valve 1 comprises an inner conduit 9, which comprises a channel 11 extending along a rectilinear axis 12 and ends with an inlet 13 and an outlet 14. In particular, inlet 13 and outlet 14 are the only openings of the conduit 9 with respect to the outside. Preferably, inlet 13 and outlet 14 are coaxial with channel 11.

Channel 11 has a cross section that is constant along axis 12 and is preferably circular. Channel 11 is a conduit portion that is radially defined by a sleeve 18, which is made of paramagnetic material (steel AISI 316 L, for instance) and has a relatively low radial thickness, in particular a thickness of less than 0.6 mm. In particular, sleeve 18 is part of a tubular body 20 having an end portion 21, which defines inlet 13 and has an inner diameter lower than the channel 11. Body 20 further comprises an external flange or projection 22, which is preferably arranged at an axial end opposite to portion 21.

Valve 1 comprises a magnetic actuator 25, in turn comprising a magnetic stator 26, arranged in fixed position around sleeve 18; and a movable core 27, which is made of ferromagnetic material, is housed in channel 11 and is axially guided by the inner surface of sleeve 18.

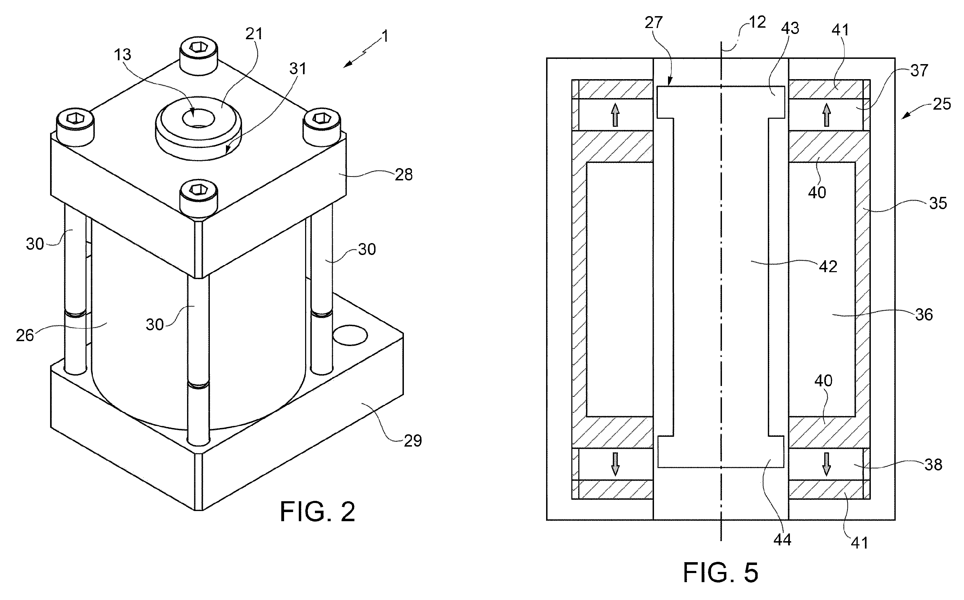

As shown in Figure 2, preferably, stator 26 is axially clamped between two plates 28,29, which are fixed to each other by means of bolts 30. Plate 28 has an axial through hole 31 and is fitted on body 20. Preferably, portion 21 axially projects out of hole 31.

With reference to Figures 3 and 4, plate 29 defines outlet 14 and axially rests on flange 22, so that the latter is axially clamped between plate 29 and stator 26, in order to have the stator 26 fixed with respect to body 20. In particular, an annular gasket 33 is provided at the coupling between body 20 and plate 29 so as to guarantee the sealing of the conduit 9 with respect to the external non-sterile environment.

As schematically shown in Figure 5, stator 26 comprises a housing 35 made of ferromagnetic material; and a coil 36, which is arranged around sleeve 18 (not shown in Figure 5) and faces the external surface of sleeve 18 so as to have the lowest radial air gap as possible with respect to the core 27. Stator 26 further comprises two magnets 37,38, in particular permanent magnets, which are aligned with the coil 36 in a direction parallel to axis 12, are arranged on opposite sides of the coil 36, preferably in symmetrical positions, and have a same pole (N or S) aimed against each other so that the respective magnetic fluxes are directed in opposite axial directions in the stator 26.

Coil 36 is arranged in a seat of the housing 35, so that two ring portion 40 of ferromagnetic material are axially provided between coil 36 and magnets 37,38 in order to guide the magnetic fluxes. Preferably, ring portions 41 of ferromagnetic material are axially provided also at the external end sides of the magnets 37,38.

According to an aspect of the present invention, core 27 comprises a central portion 42 having an external diameter lower than that of the channel 11; and two opposite end portions or poles 43,44 having an external diameter substantially equal to that of the channel 11, so as to radially project outwardly with respect to portion 42 and to be axially guided by the inner surface of sleeve 18.

Moreover, as shown in Figures 3 and 4, according to the present invention, core 27 has one or more passages 45 to allow a fluid to freely flow along the conduit 9. Preferably, but not exclusively, the passages 45 are parallel to axis 12. In particular, passages 45 are made in both portions 43,44 and are defined by through holes, which are spaced apart about axis 12.

According to a variant (not shown), passages 45 are defined by grooves, made on the side surfaces that radially define the portions 43,44 and slidingly engage the sleeve 18. According to another variant (not shown), at least part of a passage 45 extend along axis 12, i.e. at the centre of the core 27.

According to the particular embodiment shown in figures 3 and 4, each of the portions 43,44 tapers outwardly in radial direction, so as to reduce the area that frictionally engages the inner surface of the sleeve 18 and to reduce the inertia of the core 27. For instance, each of the portions 43,44 is axially delimited by frustum-conical surfaces 46.

According to a preferred variant, portions 43,44 have a rough cylindrical shape as schematically shown in figure 5.

Valve 1 comprises a valve seat 48, arranged along said conduit 9 in a position near to channel 11; and a plug member 49, which axially faces the valve seat 48. In the preferred embodiment, valve seat 48 is defined by plate 29 and puts the channel 11 into communication with the outlet 14. Plug member 49 is coaxial and fixed with respect to portion 44 to axially slide together with the core 27 in response to an electrical supply given to the coil 36, between an opening position, in which valve seat 48 is open (Figure 4), and a closing position, in which valve seat 48 is closed. In particular, a threaded coupling 50 is provided to engage the plug member 49 to an axial hole made into portion 44.

According to a preferred variant (not shown), core 27 has a symmetrical shape with respect to a middle plane, orthogonal to axis 12.

In particular, the threaded axial hole of coupling 50 is made into the plug member 49 and is engaged by a threaded stem, which is part of core 27 and axially projects from portion 44. At the other axial end, core 27 has another stem, that axially projects from portion 43 and is provided with a cap. The latter is made of relatively soft material, to absorb possible impacts with portion 21, and/or ends with a tapered tip, to deflect outwardly the fluid that enters through inlet 13.

In particular, when the coil 36 is not energized, the valve seat 48 is partly open, and the core 27 is arranged in a rest position defined as a central and symmetric position of the portions 43,44 with respect to the positions of the magnets 37,38.

In order to close or to completely open the valve seat 48, the coil 36 is energized with respective opposite electrical currents.

During closing, the supplied current increases the magnetic flux in the air gap at the portion 44, i.e. near the plug member 49. In the meantime, thanks to the arrangement of the magnets 38,39, at the portion 43 the magnetic flux in the air gap decreases. Therefore, the core 27 is subjected to a magnetic force axially directed towards the valve seat 48.

To reach the opening position, the operation is opposite to the above one (a current is supplied so as to increase the magnetic flux in the air gap at the portion 43).

To possibly hold the core 27 at the closing position or at the opening position without current consumption, two variants (not shown) could be envisaged: additional magnets are provided in appropriate positions; or the opening position corresponds to the above mentioned rest position, so as to be obtained by simply de-energizing the coil 36.

The advantages of the valve 1 according to the present invention are apparent from the above description. Thanks to the sleeve 18, it is possible to separate the inner aseptic environment from the external non-sterile environment. In the meantime, the magnetic actuator 25 allows to obtain lower response time when opening and closing the valve seat 48, and reduces wear of the valve components.

In the meantime, when a cleaning liquid is supplied through the inlet 13 or the outlet 14 to clean the interior of the valve 1, all the points of the conduit 9 are easily reached by the cleaning liquid, in particular around the core 27, thanks to the arrangement of the core 27 inside the conduit 9 and thanks to the provision of at least one passage 45. In the meantime, during operation, gases or liquids can easily flow from inlet 13 to outlet 14 through the core 27.

Furthermore, when the coil 36 is not energized, the core 27 and the plug member 49 return to the same rest position, as the latter is univocally defined as the central position between the magnets 37,38 thanks to the presence of the projecting portions 43,44 in the core 27.

In the meantime, when the coil 36 is energized so as to hold the core 27 in the closing position, the closing force is higher than the ones in the prior art solution disclosed in US6246131B1.

Moreover, the particular structural features of the body 20 and/or the provision of the plates 28,29 allow to make and/or assemble the valve components in a fast and easy manner. In addition, with a symmetrical core 27, the plug member 49 can be mounted to whichever axial end portion 43,44.

Finally, it shall appear that changes may be made to the valve 1 as described and illustrated herein without, however, departing from the scope of protection as defined in the accompanying claims.

In particular, the positions of the inlet 13 and the outlet 14 could be exchanged and/or could be different from what indicated in the drawings by way of example; and/or the stator 26 could be fixed with respect to the sleeve 18 without using the plates 28,29, the bolts 30 and the flange 22.

An adjusting system (shims, by way of example) could be provided to adjust the axial position of the stator 26 with respect to sleeve 18 in order to vary, during assembly of the valve components, the rest position of the core 27 inside the channel 11 and/or the closing force against the valve seat 48.

Finally, as already mentioned above, the valve 1 could be used as a proportional valve, in particular by adjusting the electric current supplied to the coil 36 in order to vary the passage area for the fluid between the plug member 49 and the valve seat 48.

## Claims

1. A valve (1) comprising:
• a magnetic actuator (25) comprising:
a) a sleeve (18) extending along an axis (12);
b) a movable core (27), which is made of ferromagnetic material and comprises a central portion (42) and two opposite end portions (43,44) axially guided by the inner surface of said sleeve (18); and
c) a magnetic stator (26) arranged in fixed position around said sleeve (18) and comprising: a housing (35) made of ferromagnetic material; a coil (36) facing the external surface of said sleeve (18); and two magnets (37,38), which are aligned with said coil (36), are arranged on opposite axial sides of said coil (36) and have a same pole aimed against each other;
• a conduit (9) having a valve seat (48);
• a plug member (49), which axially faces said valve seat (48) and is coaxial and fixed with respect to one of said end portions (44) so as to axially slide together with said core (27) between an opening position, in which said valve seat (48) is open, and a closing position, in which said valve seat (48) is closed;
wherein said core (27) has at least one passage (45), allowing a fluid to flow through said core (27), and said end portions (43,44) have an external diameter greater than that of said central portion (42).

2. Valve according to claim 1, **characterized in that** said conduit (9) has a single inlet (13) and a single outlet (14), so that said at least one passage (45) allows said fluid to flow through said core (27) along said conduit (9).

3. Valve according to claim 1 or 2, **characterized in that** said core (27) has a plurality of said passages (45), which are made through both said end portions (43,44) and are arranged about said axis (12).

4. Valve according to anyone of the previous claims, **characterized in that**, at the axial end opposite to said plug member (49), said core (27) is provided with a tip axially tapered towards an inlet of said conduit (9).

5. Valve according to anyone of the previous claims, **characterized by** further comprising two plates (28,29) connected to each other by means of bolts (30); said stator (26) being axially clamped between said plates (28,29).

6. Valve according to anyone of the previous claims, **characterized by** comprising::
• at least one plate (29) coaxial and fixed with respect to said stator (26);
• a tubular body (20) comprising said sleeve (18) and an external projection (22), which is axially clamped between said stator (26) and said at least one plate (29).

7. Valve according to claim 6, **characterized in that** said at least one plate (29) defines said valve seat (48); sealing means (33) being provided at the coupling between said body (20) and said at least one plate (29).

8. Valve according to claim 6 or 7, **characterized in that** said tubular body (20) defines an inlet or an outlet (13,14) of said conduit (9).

9. Valve according to anyone of claims 6 to 8, **characterized in that** said at least one plate (29) defines an inlet or an outlet (13,14) of said conduit (9); sealing means (33) being provided at the coupling between said body (20) and said at least one plate (29).

10. Valve according to claim 2, **characterized in that** said inlet and outlet (13,14) are coaxial with said sleeve (18).

11. Filling device (2) for filling a container (3) with a liquid, **characterized by** comprising at least one valve (1) made according to anyone of the previous claims.

12. Filling device (2) according to claim 11, **characterized in that** said valve (1) defines part of a valve block (8) arranged along a gas line (5) to control the flow of a gas from and/or towards the container (3).

13. Filling device (2) according to claim 11, **characterized in that** said valve (1) is arranged along a liquid supply line (6) to control the flow of the liquid filled into the container (3).

## Patentansprüche

1. Ventil (1) mit:
• einem magnetischen Stellglied (25), mit:
a) einer Hülse (18), die sich entlang einer Achse (12) erstreckt;
b) einem beweglichen Kern (27), welcher aus einem ferromagnetischen Material hergestellt ist und einen Zentralbereich (42) und zwei entgegengesetzte Endbereiche (43, 44) umfasst, die durch die Innenfläche der Hülse (18) axial geführt werden; und
c)einem magnetischen Stator (26), der in einer fixierten Position um die Hülse (18) herum angeordnet ist und aufweist: ein Gehäuse (35) aus ferromagnetischem Material; eine Spule (36), die der Außenfläche der Hülse (18) zugewandt ist; und zwei Magnete (37, 38), welche mit der Spule (36) ausgerichtet sind, auf entgegengesetzten axialen Seiten der Spule (36) angeordnet sind und einen gleichen Pol einander zugewandt haben;
• einer Leitung (9) mit einem Ventilsitz (48);
• einem Steckerelement (49), welches dem Ventilsitz (48) axial zugewandt ist und koaxial und fixiert in Bezug zu einem der Endbereiche (44) ist, um so zusammen mit dem Kern (27) zwischen einer Öffnungsposition, in welcher der Ventilsitz (48) offen ist, und einer Schließposition, in welcher der Ventilsitz (48) geschlossen ist, axial zu gleiten;
wobei der Kern (27) wenigstens einen Durchgang (45) hat, der einem Fluid ermöglicht, durch den Kern (27) hindurch zu fließen, und die Endbereiche (43, 44) einen Außendurchmesser haben, der größer ist als derjenige des Zentralbereichs (42).

2. Ventil nach Anspruch 1, **dadurch gekennzeichnet, dass** die Leitung (9) einen einzelnen Einlass (13) und einen einzelnen Auslass (14) hat, so dass der wenigstens eine Durchgang (45) dem Fluid ermöglicht, entlang der Leitung (9) durch den Kern (27) hindurch zu fließen.

3. Ventil nach Anspruch 1 oder 2, **dadurch gekennzeichnet, dass** der Kern (27) eine Mehrzahl der Durchgänge (45) hat, die durch beide der Endbereiche (43, 44) hindurch ausgebildet und um die Achse (12) herum angeordnet sind.

4. Ventil nach einem der vorhergehenden Ansprüche, **dadurch gekennzeichnet, dass** an dem axialen Ende, entgegengesetzt zum Steckerelement (49), der Kern (27) mit einer Spitze versehen ist, die axial in Richtung eines Einlasses der Leitung (9) zugespitzt ist.

5. Ventil nach einem der vorhergehenden Ansprüche, **gekennzeichnet durch** ferner zwei Platten (28, 29), die miteinander mit Hilfe von Bolzen (30) verbunden sind, wobei der Stator (26) zwischen den Platten (28, 29) axial eingeklemmt ist.

6. Ventil nach einem der vorhergehenden Ansprüche, **gekennzeichnet durch**:
• wenigstens eine Platte (29), koaxial und fixiert im Bezug zum Stator (26),
• ein rohrförmiges Gehäuse (29) mit der Hülse (18) und einem Außenvorsprung (22), der axial zwischen dem Stator (26) und der wenigstens einen Platte (29) eingeklemmt ist.

7. Ventil nach Anspruch 6, **dadurch gekennzeichnet, dass** die wenigstens eine Platte (29) den Ventilsitz (48) bildet; wobei eine Dichtungseinrichtung (33) an der Kupplung zwischen dem Gehäuse (20) und der wenigstens einen Platte (29) vorgesehen ist.

8. Ventil nach Anspruch 7, **dadurch gekennzeichnet, dass** das rohrförmige Gehäuse (20) einen Einlass oder einen Auslass (13, 14) der Leitung (9) bildet.

9. Ventil nach einem der Ansprüche 6 bis 8, **dadurch gekennzeichnet, dass** die wenigstens eine Platte (29) einen Einlass oder einen Auslass (13, 14) der Leitung (9) bildet; wobei die Dichtungseinrichtung (33) an der Kupplung zwischen den Gehäuse (20) und der wenigstens einen Platte (29) vorgesehen ist.

10. Ventil nach Anspruch 2, **dadurch gekennzeichnet, dass** der Einlass und der Auslass (13, 14) koaxial mit der Hülse (18) sind.

11. Füllvorrichtung (2) zum Befüllen eines Containers (3) mit einer Flüssigkeit, **gekennzeichnet durch** wenigstens ein Ventil (1), das gemäß einem der vorhergehenden Ansprüche hergestellt ist.

12. Füllvorrichtung (2) nach Anspruch 11, **dadurch gekennzeichnet, dass** das Ventil (1) einen Teil eines Ventilblocks (8) bildet, der entlang einer Gasleitung (5) angeordnet ist, um den Fluss eines Gases von und/oder in Richtung des Behälters (3) zu steuern.

13. Füllvorrichtung (2) nach Anspruch 11, **dadurch gekennzeichnet, dass** das Ventil (1) entlang einer Flüssigkeit-Zuführleitung (6) angeordnet ist, um den Fluss der in dem Behälter (3) gefüllten Flüssigkeit zu steuern.

## Revendications

1. Valve (1) comprenant :
un actionneur magnétique (25) comprenant :
a) un manchon (18) s'étendant le long d'un axe (12) ;
b) un noyau mobile (27), qui est réalisé en un matériau ferromagnétique et comprend une portion centrale (42) et deux portions d'extrémité opposées (43, 44) guidées axialement par la surface intérieure dudit manchon (18) ; et
c) un stator magnétique (26) agencé en position fixe autour dudit manchon (18) et comprenant : un boîtier (35) réalisé en un matériau ferromagnétique ; une bobine (36) orientée vers la surface externe dudit manchon (18) ; et deux aimants (37, 38), qui sont alignés avec ladite bobine (36), sont agencés sur des côtés axiaux opposés de ladite bobine (36) et ont un même pôle dirigé l'un contre l'autre ;
un conduit (9) ayant un siège de valve (48) ;
un élément d'obturation (49), qui est orienté axialement vers ledit siège de valve (48) et est coaxial et fixe par rapport à l'une desdites portions d'extrémité (44) de manière à glisser axialement conjointement audit noyau (27) entre une position d'ouverture, dans laquelle ledit siège de valve (48) est ouvert, et une position de fermeture, dans laquelle ledit siège de valve (48) est fermé ;
dans laquelle ledit noyau (27) a au moins un passage (45), permettant l'écoulement d'un fluide à travers ledit noyau (27), et en ce que lesdites portions d'extrémité (43, 44) ont un diamètre externe supérieur à celui de ladite portion centrale (42).

2. Valve selon la revendication 1, **caractérisée en ce que** ledit conduit (9) a une seule entrée (13) et une seule sortie (14), de sorte que ledit au moins un passage (45) permet l'écoulement dudit fluide à travers ledit noyau (27) le long dudit conduit (9).

3. Valve selon la revendication 1 ou 2, **caractérisée en ce que** ledit noyau (27) a une pluralité desdits passages (45), qui sont réalisés à travers lesdites deux portions d'extrémité (43, 44) et sont agencés autour dudit axe (12).

4. Valve selon l'une quelconque des revendications précédentes, **caractérisée en ce que**, au niveau de l'extrémité axiale opposée audit élément d'obturation (49), ledit noyau (27) est muni d'une pointe axialement conique en direction d'une entrée dudit conduit (9).

5. Valve selon l'une quelconque des revendications précédentes, **caractérisée en ce qu'**elle comprend en outre deux plaques (28, 29) reliées l'une à l'autre au moyen de boulons (30) ; ledit stator (26) étant axialement serré entre lesdites plaques (28, 29).

6. Valve selon l'une quelconque des revendications précédentes, **caractérisée en ce qu'**elle comprend :
au moins une plaque (29) coaxiale et fixe par rapport audit stator (26) ;
un corps tubulaire (20) comprenant ledit manchon (18) et une projection externe (22), qui est axialement serrée entre ledit stator (26) et ladite au moins une plaque (29).

7. Valve selon la revendication 6, **caractérisée en ce que** ladite au moins une plaque (29) définit ledit siège de valve (48) ; un moyen d'étanchéité (33) étant prévu au niveau du raccordement entre ledit corps (20) et ladite au moins une plaque (29).

8. Valve selon la revendication 6 ou 7, **caractérisée en ce que** ledit corps tubulaire (20) définit une entrée ou une sortie (13, 14) dudit conduit (9).

9. Valve selon l'une quelconque des revendications 6 à 8, **caractérisée en ce que** ladite au moins une plaque (29) définit une entrée ou une sortie (13, 14) dudit conduit (9) ; un moyen d'étanchéité (33) étant prévu au niveau du raccordement entre ledit corps (20) et ladite au moins une plaque (29).

10. Valve selon la revendication 2, **caractérisée en ce que** lesdites entrée et sortie (13, 14) sont coaxiales audit manchon (18).

11. Dispositif de remplissage (2) pour remplir un conteneur (3) avec un liquide, **caractérisé en ce qu'**il comprend au moins une valve (1) réalisée selon l'une quelconque des revendications précédentes.

12. Dispositif de remplissage (2) selon la revendication 11, **caractérisé en ce que** ladite valve (1) définit une partie d'un bloc de valves (8) agencé le long d'une ligne de gaz (5) pour contrôler l'écoulement d'un gaz en provenance de et/ou en direction du conteneur (3).

13. Dispositif de remplissage (2) selon la revendication 11, **caractérisé en ce que** ladite valve (1) est agencée le long d'une conduite d'alimentation en liquide (6) pour contrôler l'écoulement du liquide versé dans le conteneur (3).
